# EUROPEAN PATENT SPECIFICATION

(11) **EP 3 776 441 B1**
(45) Date of publication and mention of the grant of the patent: **22.11.2023**
(21) Application number: 19775523.4
(22) Date of filing: 29.03.2019
(51) Int. Cl.: G06Q 40/06, G06Q 20/36, G06Q 20/38, G06Q 40/04

(54) **DIGITAL ASSET EXCHANGE**
AUSTAUSCH DIGITALER VERMÖGENSWERTE
ÉCHANGE D'ACTIFS NUMÉRIQUES

(30) Priority: 30.03.2018 US 201862650824 P
(43) Date of publication of application: 17.02.2021
(73) Proprietor: Exposition Park Holdings Sezc, Grand Cayman, KY1-9010 (KY); Yantis, Jonathan, Grant's Pass, Oregon 97527 (US); Quigley, William, Pacific Palisades, California 90272 (US)
(72) Inventor: YANTIS, Jonathan, Grant's Pass, Oregon 97527 (US); QUIGLEY, William, Palisades, California 90272 (US)
(74) Representative: DehnsGermany Partnerschaft von Patentanwälten
(86) International application number: PCT/US2019/025003
(87) International publication number: WO 2019/191688

(56) References cited:
- WO-A2-2018/020389
- US-A1- 2015 142 603
- US-A1- 2015 170 112
- US-A1- 2015 332 256
- US-A1- 2016 092 988
- US-A1- 2017 011 460
- US-A1- 2017 103 385
- US-A1- 2017 103 468
- KLEMS MARKUS ET AL: "Trustless Intermediation in Blockchain-Based Decentralized Service Marketplaces", 18 October 2017 (2017-10-18), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 731 - 7, XP047453043, ISBN: 978-3-642-17318-9 [retrieved on 2017-10-18] * abstract * * page 732, paragraph 1 * * page 732, paragraph 4 * * page 733, paragraph 3 - paragraph 4 * * page 733, paragraph 3 - page 736, paragraph 2 *

## Description

### BACKGROUND

### 1. Field of the Invention

The systems and methods described herein relate to the exchange of digital assets. More specifically, the systems and methods described herein provide for facilitating the sale and exchange of digital assets between unrelated parties utilizing blockchain technology. The systems and methods provide for listing and searching digital assets currently for sale, transfer of digital assets between the parties, and settlement of payment for the digital asset.

A digital asset is any information that can be stored, transmitted, interpreted, and used that is encoded in a numeric format, including without limitation information encoded as binary data. Currently the vast majority of digital assets are stored in binary format but as technology progresses other non-binary forms of encoding and storage may be developed for creating digital assets. Examples of digital assets include any type of digital document, encoded audio, encoded video, encoded text, executable code in various formats, and any other type of information. Digital assets are not limited by the means of storage or transport, which may be electronic, optical, or other types of storage or transport mechanism existing or to be developed in the future.

### 2. Description of the Related Art

The large and ever-growing market for digital assets allows parties to buy and sell digital assets, such as virtual items for video games. The growth of this market has been hindered by a variety of factors such as fragmentation in the marketplace, lack of marketplace trust, and high transaction costs, among others. The fragmentation of the marketplace across hundreds of different providers results in items for sale on one marketplace being invisible to buyers on other marketplaces, thus reducing efficiencies in the global market. The lack of marketplace trust often arises from the high incidence of fraud or outright theft that occurs due to the nature of the goods and the disconnected methods of transfer and payment that are often used to complete these kinds of transactions. Current market factors such as the cross-border nature of many transactions and the manual nature of many of these transfers also causes transaction costs to be high compared to other types of electronic transactions.

KLEMS MARKUS ET AL: "Trustless Intermediation in Blockchain-Based Decentralized Service Marketplaces", Springer International Publishing AG 2017, M. Maximilien et al. (Eds.): ICSOC 2017, LNCS 10601, pp. 731-739, ISBN: 978-3-642-17318-9, discloses a decentralized service marketplace implementing the concept of trustless intermediation by using blockchain-enabled smart contracts.

WO 2018/020389 A2 discloses a blockchain implemented method and system for executing a micropayment channel including a reduced number of transactions.

US 2017/0011460 A1 discloses a securities trading system including users provided with cryptographic wallets that enable the user to access a peer-to-peer network of computing nodes on which a distributed blockchain ledger is managed. Smart contracts can be used to transfer the securities among the users.

Although the embodiments of the systems and methods of the digital asset exchange are described with reference to the exchange of virtual items for video games, the digital assets that may be transferred using the digital asset exchange are not limited solely to such virtual items.

The limitations of the current marketplace for digital assets are addressed by the systems and methods described herein for facilitating global matching of buyers with sellers, with a trusted mechanism for completing asset transfer and payment.

### SUMMARY OF THE INVENTION

The invention is defined by appended independent method claim 1 and corresponding independent system claim 8.

In another embodiment, the digital asset is a virtual item. Further, the virtual item may be associated with a video game platform.

In yet another embodiment, the method includes processing a plurality of transactions into a block on the blockchain by a guild account. Also, the guild account may confirm a listing contract transaction. Further, the guild account may select a transfer agent account to execute a settlement execution contract.

In another embodiment, the listing contract includes a name of the digital asset, a game or server on which it is located and a price of the digital asset.

In yet another embodiment, the at least one smart contract is selected from a guild proposal contract; a listing contract; a settlement execution contract; a request contract; and a virtual good contract.

In a further embodiment, the accounts include a guild account; a user account; and a transfer agent account. Further, the plurality of smart contracts include a guild proposal contract; a listing contract; a settlement execution contract; a request contract; and a virtual good contract.

In another embodiment, a plurality of transactions are processed into a block on the blockchain by a guild account.

In yet another embodiment, the guild account confirms a listing contract transaction and a transfer agent account to execute a settlement execution contract.

### BRIEF DESCRIPTION OF THE DRAWINGS

Figure 1 is a diagram of an embodiment of the system described herein.
Figure 2 is flowchart depicting a method of the system described herein.
Figure 3 is a block diagram of a computer or system hardware architecture for implementing the system of Figure 1.

### DETAILED DESCRIPTION

The use of cryptocurrencies such as bitcoin, litecoin, and Ethereum, among others, is increasing rapidly. One of the fastest growing areas of cryptocurrency development is the use of specialized cryptocurrencies to fund and provide functionality to digital marketplaces. This expansion of cryptocurrencies relies on the use of Smart Contracts and initial coin offerings (ICO) to provide the tools and functionality necessary to support fully automated processing of transactions. Smart Contracts are protocols and executable computer code that define, verify, facilitate, and execute the negotiation or performance of a contract using cryptocurrencies. The use of Smart Contracts with blockchain technology provides trackable and irreversible contracts to be made and executed in a digital form.

Smart Contract technology allows a blockchain system to process self-executing transactions and agreements. Due to the decentralized nature of blockchain systems, the Smart Contracts are also executed in a decentralized manner.

The systems and methods described herein utilize blockchain technology in combination with Smart Contracts to allow users to negotiate, document, and execute the transfer of digital assets.

Blockchain technology forms the basis for cryptocurrencies that are rapidly expanding in application and adoption. Such cryptocurrencies augment or replace existing payment methodologies such as cash, but also provide a decentralized system for processing transfers of the cryptocurrency. The basis for the blockchain technology is a linked list of data blocks. Each block contains a link to the prior block in the chain and encrypted data. In some implementations of a blockchain, the encrypted data may include transaction data documenting the exchange of a digital currency, software such as executable digital contracts (also referred to as Smart Contracts), and data associated with the use of a digital contract by specific parties, although it may also include other types of data as described in further detail below. The data in each block in the blockchain includes a hash of the previous block in the chain as a means of identifying and preventing attempts to modify prior blocks in the blockchain.

In many implementations of blockchain technology, the management and extension of the blockchain is decentralized and distributed over computer systems operated by numerous unaffiliated entities who contribute their computing power to the system. These distributed contributors provide the infrastructure of the blockchain system by storing copies of the blockchain, and performing the algorithms necessary to process transactions, deploy them into new blocks on the blockchain, and distribute those blocks to other parts of the system. In some blockchain implementations the contributors are compensated for this service by receiving a fee denominated in a cryptocurrency in return for the processing of a new block in the blockchain. An important aspect of blockchain security is that it is difficult to modify blocks after they have been added to the blockchain and accepted into the main branch, although blockchains do have temporary competing branches.

The blockchain technology has been enhanced by the concept of Smart Contracts. Smart Contracts are executable computer programs that are compiled into the data in a block in the blockchain by the developers of the Smart Contract. Once the Smart Contract has been deployed into the blockchain other users of the blockchain may execute the Smart Contract with confidence that it has not been modified by a malicious third party. These executable computer programs are referred to as "Smart Contracts" because they may be used to represent and implement agreements between various parties regarding the transfer of digital currency and other types of assets, however, they do not have to represent contractual arrangements. A software developer develops the Smart Contract by writing program code using a scripting language such as JavaScript, Solidity, or other scripting languages, or an object coding language, such as Java, or a machine coding language such as C or C++.

When a Smart Contract is deployed into the blockchain, the program code is processed into a block by one of the contributors to the system just as any other transaction on the blockchain, and typically a fee is paid to the node contributor who compiles and executes the contract/program. The process of deploying the Smart Contract may include compiling the program code into bytecode, object code, binary code, or some other executable form. When the Smart Contract is successfully deployed into the block chain it is assigned an address just as any other blockchain transaction. This address is used to access the Smart Contract and execute the functionality provided in it. Typically, an Application Binary Interface (ABI) information, similar to an application programming interface (API), is provided to a user of the contract, or the software that interfaces with the contract (such as a wallet application) so that the user can interact with the various functions of the Smart Contract. The ABI describes the various functions and methods provided as part of the Smart Contract so that they can be accessed by the user or the user's software. Example embodiments of Smart Contracts will be discussed below.

A Smart Contract of executable computer program code that has been deployed into the blockchain may then be used by anyone who has the address of the Smart Contract on the blockchain. Executing the Smart Contract, or a portion of it, does not necessarily incur fees unless updates to the blockchain are required as part of that step in the contract. If the Smart Contract is properly implemented many different users may utilize the Smart Contract simultaneously to govern their own specific agreements or transactions.

The Smart Contract may have multiple steps that are executed or completed by different parties to the contract. For example, a Smart Contract may be invoked by a first party to make an offer to a second party or a group of potential contracting parties by instantiating a copy of a certain contract. The second party (or one of the group) may respond by "signing" that instance of the contract. The process of "signing" the contract may comprise invoking a programmatic method defined as part of the contract. Some contracts may provide for multiple parties, such as buyer, seller, lender, borrower, escrow agent, transfer agent, and others, all of whom may independently interact with a particular instance of a contract to sign it, or to take other actions associated with a specific type of contract.

Smart Contracts are well suited to contracts that involve digital assets or that may be completely executed via programmatic interactions between the contracting parties, the blockchain, digital assets, and resources on the internet or otherwise connected digitally to the contract. For example, Smart Contracts may be able to automatically transfer control and ownership of digital assets or transfer money between online payment systems such as PayPal, bank accounts via ACH (automated clearing house) or other electronic payment systems. Application programming interfaces provided by these external systems provide methods for a digital Smart Contract to execute actual transfers of assets or funds between parties without non-programmatic processes.

In an embodiment, a WAX (Worldwide Asset eXchange) Platform utilizes Smart Contracts to implement the automatic listing, sale, negotiation, and settlement of digital assets. The WAX Platform uses a cryptocurrency, a WAX Token, as the medium for these transactions, and for the related functions needed to create a marketplace although any digital currency or cryptocurrency may be used. WAX Tokens are used to transfer value between users in exchange for digital assets, to pledge support for confirming nodes in the WAX Platform (known as Guilds), and to pay fees to users who provide the processing necessary for the operation of the WAX Platform.

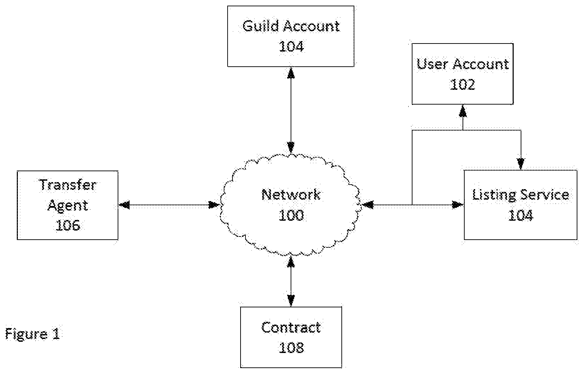

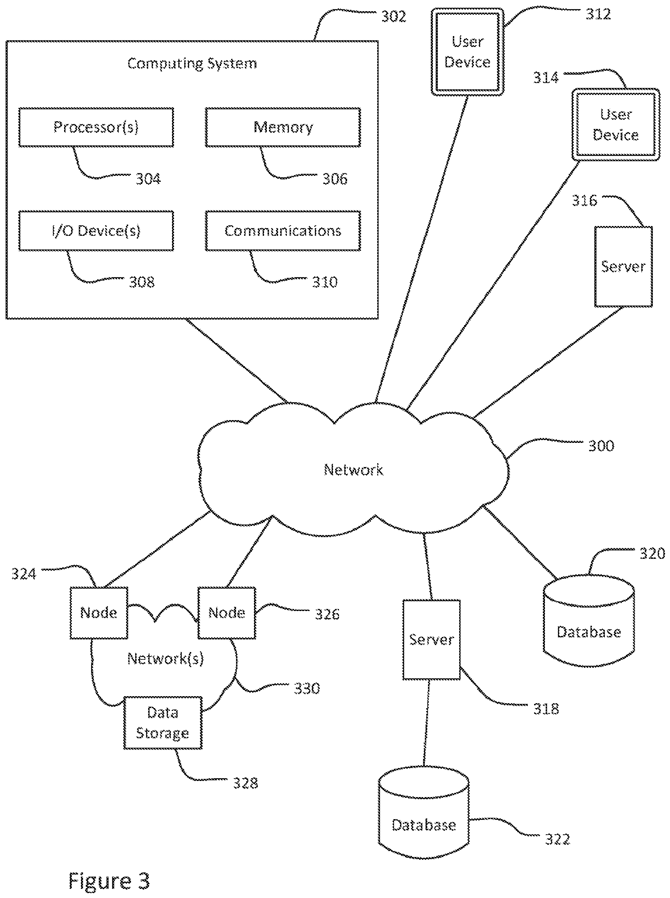

Referring now to Figure 1, a schematic view of an embodiment of the WAX Platform is depicted. The decentralized WAX Platform functions through a variety of users that interact via a global telecommunications Network 100. In an embodiment, Network 100 encompasses the Internet using the Internet protocol suite to interconnect devices worldwide however, any system or protocol for coupling computing devices may be used. A representative computing system for use with the WAX Platform will be described below in connection with Figure 3. Users of the WAX Platform have various types of accounts and communicate with one another to transfer WAX Tokens between accounts, deploy instances of types of Smart Contracts provided by the WAX Platform, and interact with instances of these Smart Contracts.

An individual user who desires to buy or sell digital assets using the WAX Platform participates via User Account 102. User Account 102 has a single private key for creating and signing transactions and an address for sending and receiving cryptocurrency or digital assets. User Account 102 controls WAX Tokens, WAX Tether, and digital assets. A user may directly interact with the WAX Platform via User Account 102 of Figure 1, or through Listing Service 104, such as a website. Listing Service 104, implemented via a website, provides a simpler interface to the WAX Platform to a typical user, however a more sophisticated user may directly interact with the WAX Platform through User Account 102.

Another type of account provided in the WAX Platform is a Guild Account. Guild Account 104 executes a variety of tasks that permit the WAX Platform to function. The users who operate Guild Accounts 104 provide a portion of the infrastructure that supports the operation of the decentralized WAX Platform. Each Guild Account 104 has a private key and address, and a public encryption key/private decryption key combination for use in communicating with third parties regarding transactions. The users with Guild Accounts 104 provide the processing power to form blocks on the WAX Token blockchain, and to send those blocks to other Guild Accounts 104 as the blockchain is extended. In return for providing the functionality to power the WAX Platform, the Guild Accounts 104 receive fees (via WAX Token) for processing transactions to form blocks in the blockchain.

Guild Accounts 104 serve as the "confirming nodes" that are necessary for the processing of blockchain transactions. The WAX Platform limits the number of Guild Accounts to ensure the performance of the system. Parties that desire to operate a Guild Account 104 submit a Proposal Contract to the WAX Platform describing the operation of the proposed Guild, including information such as the address of the Guild, and the type of game, virtual items, or digital assets that the Guild will promote and manage via Transfer Agents 106. The Proposal Contract may also describe the percentage of fees that the Guild will share to users who pledge WAX Token to the Guild, and how the Guild will monitor the Transfer Agents used by the Guild to complete the processing of the transactions. Proposal Contracts are deployed on the blockchain so that User Accounts may interact with them and so they may receive pledged WAX Tokens.

A third type of account in the WAX Platform is a Transfer Agent Account. As shown in Figure 1, Transfer Agent Accounts 106 act as intermediaries between User Accounts 102 to ensure the completion of a transaction. When a User Account 102 initiates the purchase of a digital asset, the Guild Account 104 responsible for handling that type of digital asset assigns a Transfer Agent 106 to the transaction. Guild Account 104 sends an encrypted message to assigned Transfer Agent 106 with the details of the buyer and seller and their User Accounts 102. Guilds are responsible for optimizing the assignment of transactions to Transfer Agents 104 based on a variety of factors, which may include reputational history, proximity, load balancing, overall activity level and current assignment loads, and other similar factors.

In an embodiment, a digital asset may require human interaction to complete the transfer, Transfer Agent 106 provides a neutral third party to complete the transfer and ensure that the buyer receives the digital asset and that the seller receives payment in the form of WAX Token. Depending on the type of digital asset, this may involve communicating with the buyer and seller to coordinate an in-game transfer and logging in to the virtual world or game environment to receive the asset from the seller and convey it to the buyer. Transfer Agents 106 receive a fee for participating in a transaction, typically paid in WAX Token. Transfer Agent 106 provides settlement execution services and escrow services to allow the non-trusting third parties to consummate the transaction. Transfer Agents 106 may also serve to arbitrate disputes between User Accounts 102 and other Transfer Agents 106.

Continuing with Figure 1, Contracts 108 are Smart Contracts deployed to the blockchain that support the functions of the WAX Platform. Several types of contracts are provided in the WAX Platform, for example, Guild Proposal Contracts, Listing Contracts, Settlement Execution Contracts, Request Contracts, Ratings Contracts and Virtual Good Contracts. Each of the various types of Contracts 108 comprises code that is stored on the WAX Platform in the blockchain for execution by User Accounts 102, Guild Accounts 104, or Transfer Agents 106. An instance of the Contract 108 may also have data associated with it such as the identity of the parties or the digital asset, the signature of the various parties as the transaction progresses through various states of completion. Although representative types of contracts will be discussed below, the WAX Platform is not limited to these example and other contracts may be used.

Each user in the WAX Platform will have a Ratings Contract based upon its transaction history and ratings received from the other user. Ratings Contracts are associated with each User Account 102, Guild Account 104 and Transfer Agent Account 106. In an embodiment, Ratings Contracts receive ratings in association with transactions and Ratings Contracts are updated as part of processing transactions to be added to the blockchain. For example, each Guild may be assigned a trust or performance score that is a combination of the pledged WAX Token from User Accounts 102 as well as ratings for Transfer Agents 106 utilized by the Guild Accounts 104, so Guild Accounts 104 are incentivized to utilize honest and responsive Transfer Agent Accounts 106.

In an embodiment, the WAX platform is a decentralized platform for processing transactions where Guild Accounts 104 work independently to process blockchain transactions. A variety of mechanisms may be used to reach a consensus among Guilds Accounts 104 with regard to processing transactions, including proof-of-work and proof-of stake.

In an embodiment, active Guild Accounts 104 are selected via a Delegated Proof of Stake (DPoS) consensus algorithm although any consensus algorithm may be used. In DPoS, User Accounts 102 and Guild Accounts 104 pledge votes denominated in WAX Token to a Proposal Contract for a Guild. The Guild Proposal Contracts receiving the most pledged support are selected to operate the initial Guild Accounts 104. Over time new Proposal Contracts may be deployed to the blockchain by users as new types of digital goods are available for sale. If additional users pledge WAX Tokens to the Proposal Contract then the Proposal may be adopted to replace an existing Guild that has lost pledged WAX Tokens, or the number of active Guilds may be expanded to allow the new Guild to become an active confirming node in the WAX Platform. Similarly, users may remove pledged WAX Tokens from an active Guild, and if the pledged WAX Tokens fall below a certain threshold, the Guild may be inactivated as a confirming node.

A Guild Account receives fees in WAX Tokens for providing services to the WAX Platform such as transaction fees for listing a digital asset for sale, acting as the confirming node for a transaction, and transferring the digital asset upon execution of the smart contract. Accounts may switch the delegated WAX Tokens from one guild to another over time, depending on the performance of the Guild. If the performance of a Guild is inadequate, enough pledged WAX Tokens may shift to another Guild and cause the underperforming Guild to lose its status as a confirming node.

Additional Guilds may become active as confirming nodes if users present proposals for Guilds to serve new games or types of digital assets. If enough support is pledged for the additional proposals, the number of active Guilds may be increased to allow the new Guild to be a confirming node. In an embodiment, each Guild is associated with a single virtual good platform game or game/server, but a game or server may have more than a single Guild associated with it.

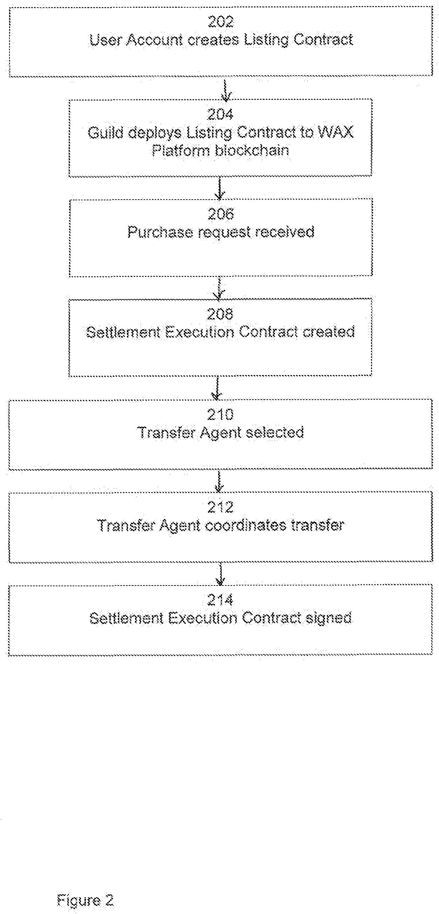

The use of Smart Contracts in the WAX Platform provides for a number of transactions to be performed. Example embodiments are discussed in connection with Figure 2 which illustrates steps involved in selling an item on the WAX Platform.

When a user desires to sell a digital asset, a User Account 102 is used to deploy a Listing Contract to create the listing on the WAX Platform. The Listing Contract may include fees for a Listing Service 104 that facilitates the listing of the asset by the User Account 102. The Listing Contract typically includes information such as the name of the digital asset, the game/server on which it is located, the price, delivery time limitations, and other similar information. The Listing Contract is sent to a Guild for confirming the transaction and deploying it to the WAX platform blockchain, and the Guild receives a nonrefundable fee for confirming the contract in its role as a confirming node.

The creation of a Listing Contract is shown in Figure 2 at step 202. This step adds the digital asset to the global catalogue of the WAX Platform so that other User Accounts 102 may find the digital asset. It also causes a Guild Account 104 to deploy the Listing Contract to the block chain in step 204. When another user finds an asset that it wishes to purchase, it sends a purchase message to the Listing Contract for that asset with a settlement execution fee in step 206. The purchase message may also include encrypted information regarding the identity of the buyer and the location of WAX Token for paying the purchase price. If the purchase message is successfully processed by the Guild, the parties proceed to settle the transaction.

As described above, upon successful completion of a purchase via a Listing Contract, a Settlement Execution Contract is created in step 208 to facilitate the settlement process. The Guild Account 104 associated with the specific type of digital asset assigns the contract to a Transfer Agent Account in step 210 to manage the transfer process. The transfer process used by the Transfer Agent Account varies depending on the details of the game or type of digital asset involved in the transaction and is indicated generally at step 212. A representative embodiment of steps performed by Transfer Agent Account is described in the following paragraphs. The details of the process will vary greatly depending on the game or environment of the digital asset, the type of asset, and the availability of automated procedures for transfer of digital assets in the specific game or environment.

Upon receipt of account information for the buyer and seller, the Transfer Agent Account communicates with both accounts to coordinate the process of pick-up and delivery of the digital asset. Transfer Agent Accounts utilize two hierarchical deterministic private keys to receive encrypted messages from a User Accounts. The private keys are iterated for each new settlement to ensure the privacy of communications between each User Account and the Transfer Agent Account.

Once the Transfer Agent Account has received a response from the seller account 102 with details for the transfer of the digital asset, the Transfer Agent Account 106 will receive the digital asset from the seller account. This may involve two characters meeting in a game world, the exchange of codes, URLs, or other keys used to transfer items in a specific game or environment, or other specific actions needed to cause control of the digital asset to transfer from the seller to the Transfer Agent Account. If the seller fails to transfer the digital asset to the Transfer Agent Account within a certain period of time then they have failed to comply with the Contract and it may be cancelled and negative feedback included in the seller's Ratings Contract.

Upon receipt of the digital asset, the Transfer Agent Account is responsible to authenticate the digital asset to ensure that the seller has complied with the sales contract. This may require the Transfer Agent Account to compare the description of the digital asset from the sales contract to the actual digital asset received from the seller to verify the properties of the digital asset.

If the Transfer Agent Account is able to verify the authenticity of the digital asset, the Agent 106 then signs the Settlement Execution Contract in step 214 to indicate that the Agent 106 has received the digital asset as required by the Settlement Execution Contract. The Settlement Execution Contract may then transfer WAX Token from the buyer's Account 102 into the Agent's account or directly to the seller's account.

Next the Transfer Agent Account delivers the digital asset to the buyer. The Agent 106 and the buyer coordinate the details of this process in a manner similar to the coordination of the process by which the Transfer Agent Account received the digital asset from the seller.

Upon successful transfer of the digital asset to the buyer, the Transfer Agent 106 signs the Settlement Execution Contract in step 214 to indicate that the digital asset has been delivered and to finalize the transfer of WAX Token to the seller.

Some games or environments may allow the direct trading of digital assets. In such situations, a Smart Contract can handle purchase and settlement without a Transfer Agent. In such cases a Virtual Good Contract may be used to list the digital asset, and then automatically transfer it upon purchase, simultaneously with transfer of the WAX Token in payment for the asset. With a Virtual Good Contract, the WAX Platform will tokenize a virtual good by creating a unique, non-fungible token to represent the virtual good. The Virtual Good Contract, for example, will record the virtual good information and metadata into each token minted.

Another type of contract provided in the WAX Platform is a Request Contract. This is created by a user who is interested in purchasing or trading for a particular digital asset. In an embodiment, the user generating a Request Contract may offer payment for the digital good, or one or more digital goods as a trade. Request Contracts are processed on the WAX Platform similarly to Listing Contracts as described above.

Additional types of Smart Contracts may be provided to manage the dispute process, if a participant disputes the performance of another participant in the system, such as a Transfer Agent.

In addition to WAX Token, some implementations of the WAX Platform may utilize a secondary cryptocurrency which may be referred to as "WAX Tether". As described above, WAX Token is the basic cryptocurrency within the WAX Platform enabling voting for Proposal Contracts, paying transaction fees, and settling the exchange of value for digital assets.

The Wax Tether cryptocurrency is a separate, temporal token used to tie the sale price of a listed digital asset so that volatile changes in the value of WAX Token do not impact the value received or given for a digital asset. The WAX Tether Tokens are pegged to a separate fungible currency such as the US Dollar, so that they represent a fixed value in that currency as of the time of the transaction.

If a user wishes to "tether" a sale to another currency, they must issue a WAX Tether Contract for their item, and include the fixed currency value for the desired sale. This creates a future-like instance, where the user agrees that they will accept the transfer of X amount of a currency for Y amount of WAX Tokens. If another user wishes to purchase the item, they may pay in WAX Tether of the same currency, or accept the exchange value of WAX Tokens.

A User Account 102 may convert WAX Tether Tokens to WAX Tokens by issuing a WAX Tether Contract offering to sell the WAX Tether to other users. Upon receipt of a purchase message from another user, the WAX Tether Tokens are transferred to that user in return for WAX Tokens at a rate determined by the WAX Tether Contract.

An exemplary computer or system hardware architecture in accordance with the embodiments of the WAX platform is shown in Figure 3. A variety of devices operate in a networked environment indicated generally by network 300 which may use any of a variety of communication protocols as understood by one of ordinary skill in the art. Devices connected to network 300 may include, for example, computing system 302 which incorporates one or more processors 304, which may general purpose or special purpose processors. Computing system may also include one or more memory/storage devices 306, one or more input/output (I/O) devices 308 and one or more communications devices 310. Additional components may be included to provide the required embodiments of a computer system which can execute software and other computer-executable program code. Any of memory devices 306 may be a non-transitory computer readable storage medium.

Other devices may be connected to network 300, including user device 312, which may be a customer device such as a mobile phone, and user device 314 which may be a laptop, desktop computer or a handheld tablet, for example. Another component coupled to network 300 includes servers 316 and 318, which represent, for example, a data server, web server or a cloud computing device. Databases 320 and 322 may be coupled directly to network 300 as in the case of database 320, or coupled to a server as shown in the case of database 322.

Another type of computer system is shown where one or more nodes 324, 326 are connected to each other and to data storage 328 by network 330. Although two nodes are shown, any number of nodes may be included. Components 324, 326, 328 and 300 may, for example, operate as a peer-to-peer network for implementing a blockchain by confirming transactions.

## Claims

1. A method, performed by a computer system, of creating a marketplace for exchanging digital assets and digital currency between user accounts, the method comprising:
deploying into a blockchain computer executable program code comprising at least one smart contract, said smart contract operable to create transactions between users of the computer system;
under control of the smart contract, deploying into the blockchain a listing contract transaction, said listing contract describing a digital asset, said listing contract further comprising computer executable program code;
under control of the listing contract, receiving a purchase message for the digital asset described in the listing contract from a purchaser, said purchase message further comprising a quantity of a cryptocurrency;
under control of the listing contract, deploying into the blockchain a settlement execution contract transaction, said settlement execution contract managing the exchange of the digital asset and the cryptocurrency,
wherein the settlement execution contract is executed by a transfer agent account, and
wherein the transfer agent account receives the digital asset, authenticates the digital asset to ensure authenticity of the digital asset, and, upon successful authentication of the digital asset, signs the settlement execution contract and delivers the digital asset to the purchaser and the settlement execution contract transfers the cryptocurrency.

2. The method of claim 1, wherein the digital asset is a virtual item.

3. The method of claim 2, wherein the virtual item is associated with a video game platform.

4. The method of claim 1, further comprising processing a plurality of transactions into a block on the blockchain by a guild account.

5. The method of claim 4, wherein the guild account confirms a listing contract transaction and selects a transfer agent account to execute a settlement execution contract.

6. The method of claim 1, wherein the listing contract further comprises a name of the digital asset, a game or server on which it is located and a price of the digital asset.

7. The method of claim 1, wherein the at least one smart contract is selected from
a guild proposal contract;
a listing contract;
a settlement execution contract;
a request contract; and
a virtual good contract.

8. A computing system for creating a marketplace for exchanging digital assets and digital currency between users, the computing system comprising:
a processor for executing computer-executable instructions; and
a computer-readable storage medium containing computer-executable instructions that when executed by the processor control the computing system to:
provide a blockchain platform for exchanging digital assets and digital currency between a plurality of accounts in the platform; and
deploy into the blockchain platform computer executable program code comprising a plurality of smart contracts, said smart contracts executed by accounts to facilitate transactions between users of the computer system,
wherein deploying into the blockchain platform computer executable program code comprising the plurality of smart contracts comprises:
deploying into the blockchain a listing contract transaction, said listing contract describing a digital asset, said listing contract further comprising computer executable program code,
under control of the listing contract, receiving a purchase message for the digital asset described in the listing contract from a purchaser, said purchase message further comprising a quantity of a cryptocurrency, and
under control of the listing contract, deploying into the blockchain a settlement execution contract transaction, said settlement execution contract managing the exchange of the digital asset and the cryptocurrency,
wherein the settlement execution contract is executed by a transfer agent account in the blockchain platform, and wherein the transfer agent account receives the digital asset, authenticates the digital asset to ensure authenticity of the digital asset, and, upon successful authentication of the digital asset, signs the settlement execution contract and delivers the digital asset to the purchaser and the settlement execution contract transfers the cryptocurrency.

9. The computing system of claim 8, wherein:
the accounts further comprise a guild account; a user account; and a transfer agent account; and
the plurality of smart contracts further comprises a guild proposal contract; a listing contract; a settlement execution contract; a request contract; and a virtual good contract.

10. The computing system of claim 8, wherein a plurality of transactions are processed into a block on the blockchain by a guild account.

11. The computing system of claim 10, wherein the guild account confirms a listing contract transaction and a transfer agent account to execute a settlement execution contract.

## Patentansprüche

1. Verfahren, das von einem Computersystem durchgeführt wird, um einen Marktplatz für den Austausch von digitalen Vermögenswerten und digitaler Währung zwischen Benutzerkonten zu schaffen, wobei das Verfahren umfasst:
Einsetzen von ausführbarem Programmcode, der mindestens einen intelligenten Vertrag umfasst, in einen Blockchain-Computer, wobei der intelligente Vertrag dazu dient, Transaktionen zwischen Benutzern des Computersystems zu erzeugen;
unter Kontrolle des intelligenten Vertrags eine Listing-Contract-Transaktion in die Blockchain einbringt, wobei der Listing-Contract einen digitalen Vermögenswert beschreibt und der Listing-Contract außerdem einen computerausführbaren Programmcode umfasst;
unter Kontrolle des Listingvertrags bzw. Listing-Contracts eine Kaufnachricht für den im Listingvertrag beschriebenen digitalen Vermögenswert von einem Käufer zu empfangen, wobei die Kaufnachricht außerdem eine Menge einer Kryptowährung umfasst;
unter Kontrolle des Listing-Contracts eine Transaktion des Abwicklungsausführungsvertrags in die Blockchain einbringen, wobei der Abwicklungsausführungsvertrag den Austausch des digitalen Vermögenswerts und der Kryptowährung verwaltet,
wobei der Abwicklungsausführungsvertrag von einem Transferagentenkonto ausgeführt wird, und
wobei das Transferagentenkonto den digitalen Vermögenswert empfängt, den digitalen Vermögenswert authentifiziert, um die Authentizität des digitalen Vermögenswertes sicherzustellen, und nach erfolgreicher Authentifizierung des digitalen Vermögenswertes den Abwicklungsausführungsvertrag unterzeichnet und den digitalen Vermögenswert an den Käufer liefert und der Abwicklungsausführungsvertrag die Kryptowährung überträgt.

2. Verfahren nach Anspruch 1, wobei der digitale Vermögenswert ein virtueller Gegenstand ist.

3. Verfahren nach Anspruch 2, wobei der virtuelle Gegenstand mit einer Videospielplattform verbunden ist.

4. Das Verfahren nach Anspruch 1 umfasst ferner die Verarbeitung einer Vielzahl von Transaktionen in einem Block auf der Blockchain durch ein Gildenkonto bzw. Guild-Konto.

5. Verfahren nach Anspruch 4, wobei das Gildenkonto eine Listing-Contract-Transaktion bestätigt und ein Transferagentenkonto auswählt, um einen Abwicklungsausführungsvertrag auszuführen.

6. Verfahren nach Anspruch 1, wobei der Listing-Contract ferner einen Namen des digitalen Vermögenswertes, ein Spiel oder einen Server, auf dem er sich befindet, und einen Preis des digitalen Vermögenswertes umfasst.

7. Verfahren nach Anspruch 1, wobei der mindestens eine intelligente Vertrag ausgewählt ist aus
einem Gilden- bzw. Guild-Vorschlagsvertrag;
einem Listing-Contract;
einem Abwicklungsausführungsvertrag;
einem Antragsvertrag; und
einem virtuellen Gütervertrag.

8. Computersystem zur Schaffung eines Marktplatzes für den Austausch von digitalen Vermögenswerten und digitaler Währung zwischen Benutzern, wobei das Computersystem Folgendes umfasst:
einen Prozessor zum Ausführen von computerausführbaren Befehlen; und
ein computerlesbares Speichermedium, das computerausführbare Anweisungen enthält, die, wenn sie vom Prozessor ausgeführt werden, das Computersystem steuern, um:
eine Blockchain-Plattform für den Austausch von digitalen Vermögenswerten und digitaler Währung zwischen einer Vielzahl von Konten auf der Plattform bereitzustellen; und
in der Blockchain-Plattform einen computerausführbaren Programmcode einsetzen, der eine Vielzahl von intelligenten Verträgen umfasst, wobei die intelligenten Verträge von Konten ausgeführt werden, um Transaktionen zwischen Benutzern des Computersystems zu erleichtern,
wobei das Bereitstellen von computerausführbarem Programmcode, der die Vielzahl von intelligenten Verträgen umfasst, auf der Blockchain-Plattform umfasst:
Bereitstellen einer Listing-Contract-Transaktion in der Blockchain, wobei der Listing-Contract einen digitalen Vermögenswert beschreibt und der Listing-Contract außerdem einen computerausführbaren Programmcode umfasst,
unter Kontrolle des Listingvertrags bzw. Listing-Contracts eine Kaufnachricht für den im Listingvertrag beschriebenen digitalen Vermögenswert von einem Käufer empfängt, wobei die Kaufnachricht außerdem eine Menge einer Kryptowährung umfasst, und
unter Kontrolle des Listing-Contracts eine Transaktion des Abwicklungsausführungsvertrags in die Blockchain einbringen, wobei der Abwicklungsausführungsvertrag den Austausch des digitalen Vermögenswerts und der Kryptowährung verwaltet,
wobei der Abwicklungsausführungsvertrag von einem Transferagenten-Konto in der Blockchain-Plattform ausgeführt wird, und wobei das Transferagenten-Konto den digitalen Vermögenswert empfängt, den digitalen Vermögenswert authentifiziert, um die Authentizität des digitalen Vermögenswertes sicherzustellen, und nach erfolgreicher Authentifizierung des digitalen Vermögenswertes den Abwicklungsausführungsvertrag unterzeichnet und den digitalen Vermögenswert an den Käufer liefert und der Abwicklungsausführungsvertrag die Kryptowährung überträgt.

9. Computersystem nach Anspruch 8, wobei:
die Konten außerdem umfassen ein Gildenkonto, ein Benutzerkonto und ein Transferagentenkonto; und
die Mehrzahl der intelligenten Verträge umfasst ferner einen Gildenvorschlagsvertrag, einen Listing-Contract, einen Abwicklungsausführungsvertrag, einen Anfragevertrag und einen Vertrag über virtuelle Güter.

10. Computersystem nach Anspruch 8, wobei eine Vielzahl von Transaktionen von einem Gildenkonto in einem Block auf der Blockchain verarbeitet werden.

11. Computersystem nach Anspruch 10, wobei das Gildenkonto eine Listing-Contract-Transaktion und ein Transferagentenkonto bestätigt, um einen Abwicklungsausführungsvertrag auszuführen.

## Revendications

1. Méthode, exécutée par un système informatique, de création d'une place de marché pour l'échange d'actifs numériques et de monnaie numérique entre des comptes d'utilisateurs, la méthode comprenant :
déployer dans une blockchain un code de programme exécutable par l'ordinateur comprenant au moins un contrat intelligent, ledit contrat intelligent permettant de créer des transactions entre les utilisateurs du système informatique ;
sous le contrôle du contrat intelligent, déployer dans la blockchain une transaction de contrat de référencement (« Listing-Contract »), ledit contrat de référencement décrivant un actif numérique, ledit contrat de référencement comprenant en outre un code de programme exécutable par ordinateur ;
sous le contrôle du contrat de référencement, recevoir d'un acheteur un message d'achat pour le bien numérique décrit dans le contrat de référencement, ledit message d'achat comprenant en outre une quantité de crypto-monnaie ;
sous le contrôle du contrat de référencement, déployer dans la blockchain une transaction de contrat d'exécution de règlement, ledit contrat d'exécution de règlement gérant l'échange de l'actif numérique et de la crypto-monnaie,
dans lequel le contrat d'exécution du règlement est exécuté par un compte d'agent de transfert, et
le compte de l'agent de transfert reçoit l'actif numérique, authentifie l'actif numérique pour en garantir l'authenticité et, une fois l'authentification de l'actif numérique réussie, signe le contrat d'exécution du règlement et livre l'actif numérique à l'acheteur, tandis que le contrat d'exécution du règlement transfère la crypto-monnaie.

2. La méthode selon la revendication 1, dans laquelle le bien numérique est un élément virtuel.

3. La méthode selon la revendication 2, dans laquelle l'objet virtuel est associé à une plate-forme de jeu vidéo.

4. La méthode selon la revendication 1, comprenant en outre le traitement d'une pluralité de transactions dans un bloc de la blockchain par un compte de guilde.

5. La méthode selon la revendication 4, dans laquelle le compte de guilde confirme une transaction de contrat de référencement et sélectionne un compte d'agent de transfert pour exécuter un contrat d'exécution de règlement.

6. La méthode selon la revendication 1, dans laquelle le contrat de référencement comprend en outre un nom pour le bien numérique, un jeu ou un serveur sur lequel il se trouve et un prix pour le bien numérique.

7. La méthode selon la revendication 1, dans laquelle au moins un contrat intelligent est choisi parmi les suivants
un contrat de proposition de guilde ;
un contrat de référencement ;
un contrat d'exécution de règlement ;
un contrat de demande ; et
un contrat des articles virtuels.

8. Système informatique permettant de créer une place de marché pour l'échange d'actifs numériques et de devises numériques entre utilisateurs, le système informatique comprenant :
un processeur pour l'exécution d'instructions exécutables par ordinateur ; et
un support de stockage lisible par ordinateur contenant des instructions exécutables par ordinateur qui, lorsqu'elles sont exécutées par le processeur, commandent le système informatique pour :
fournir une plateforme blockchain pour l'échange d'actifs numériques et de devises numériques entre une pluralité de comptes dans la plateforme ; et
déployer dans la plateforme blockchain un code de programme exécutable par ordinateur comprenant une pluralité de contrats intelligents, lesdits contrats intelligents étant exécutés par des comptes pour faciliter les transactions entre les utilisateurs du système informatique,
dans lequel le déploiement dans la plate-forme blockchain du code de programme exécutable par ordinateur comprenant la pluralité de contrats intelligents comprend :
déployer dans la blockchain une transaction de contrat de référencement, ledit contrat de référencement décrivant un actif numérique, ledit contrat de référencement comprenant en outre un code de programme exécutable par ordinateur,
sous le contrôle du contrat de référencement, recevoir un message d'achat pour le bien numérique décrit dans le contrat de référencement de la part d'un acheteur, ledit message d'achat comprenant en outre une quantité de crypto-monnaie, et
sous le contrôle du contrat de référencement, déployer dans la blockchain une transaction de contrat d'exécution de règlement, ledit contrat d'exécution de règlement gérant l'échange de l'actif numérique et de la crypto-monnaie,
dans lequel le contrat d'exécution du règlement est exécuté par un compte d'agent de transfert dans la plateforme blockchain, et dans lequel le compte d'agent de transfert reçoit l'actif numérique, authentifie l'actif numérique pour en garantir l'authenticité et, une fois l'authentification de l'actif numérique réussie, signe le contrat d'exécution du règlement et livre l'actif numérique à l'acheteur, et le contrat d'exécution du règlement transfère la crypto-monnaie.

9. Le système informatique selon la revendication 8, dans lequel :
les comptes comprennent en outre un compte de guilde, un compte d'utilisateur et un compte d'agent de transfert ; et
la pluralité de contrats intelligents comprend en outre un contrat de proposition de guilde, un contrat de référencement, un contrat d'exécution de règlement, un contrat de demande et un contrat des articles virtuels.

10. Le système informatique selon la revendication 8, dans lequel une pluralité de transactions sont traitées dans un bloc de la blockchain par un compte de guilde.

11. Le système informatique selon la revendication 10, dans lequel le compte de la guilde confirme une transaction de contrat de référencement et un compte d'agent de transfert pour exécuter un contrat d'exécution de règlement.
